# EUROPEAN PATENT APPLICATION

(11) **EP 1 515 321 A1**
(43) Date of publication of application: **16.03.2005**
(21) Application number: 03723164.4
(22) Date of filing: 22.04.2003
(51) Int. Cl.: G11B 7/24

(54) **OPTICAL RECORDING MEDIUM**

(30) Priority: 22.04.2002 JP 2002119531
(71) Applicant: TDK Corporation, Chuo-ku, Tokyo 103-8272 (JP)
(72) Inventor: MIZUSHIMA, Tetsuro,c/o TDK Corporation, Chuo-ku, Tokyo 103-8272 (JP); YOSHINARI, Jiro,c/o TDK Corporation, Chuo-ku, Tokyo 103-8272 (JP)
(74) Representative: HOFFMANN - EITLE
(86) International application number: PCT/JP2003/005089
(87) International publication number: WO 2003/098619

(57) **Abstract**

It is an object of the present invention to provide a data rewritable type optical recording medium which includes a plurality of recording layers and in which data reading characteristics and reproducing characteristics of the respective recording layers can be improved.

An optical recording medium according to the present invention includes an L1 recording layer 30 and an L0 recording layer 20 formed on a support substrate 11, and a transparent intermediate layer 12 formed between the L1 recording layer 30 and the L0 recording layer 20. The L0 recording layer 20 includes a recording film 24, a first dielectric film 25 disposed in contact with the recording film 24 on the side of the light incidence plane 13a, a second dielectric film 23 disposed in contact with the recording film 24 on the side of the support substrate 11, a transparent heat radiation film 26 disposed in contact with the first dielectric film 25 on the side of the light incidence plane 13a, a translucent reflective film 22 disposed in contact with the second dielectric film 23 on the side of the support substrate 11 and a base protect film 21 disposed between the translucent reflective film 22 and the transparent intermediate layer 12. The thickness of the second dielectric film 23 is set to be thinner than 15 nm and the thickness of the translucent reflective film 22 is set to be thinner than 20 nm.

## Description

### BACKGROUND OF THE INVENTION

The present invention relates to an optical recording medium, and particularly, to a data rewritable type optical recording medium which includes a plurality of recording layers superposed on each other.

### DESCRIPTION OF THE PRIOR ART

Although recording media such as the CD, DVD and the like have been widely used as recording media for recording digital data, a need is felt for optical recording media of progressively larger data recording capacity.

This has led to the development of optical recording media having two recording layers and such optical recording media have already been put into practical use as the DVD-Video and the DVD-ROM and other optical recording media adapted to enable only data reading.

An optical recording medium adapted only for reading data and provided with two recording layers is formed by laminating two substrates each having prepits constituting a recording layer on the surface thereof, via an intermediate layer.

Further, an optical recording medium having two recording layers has been recently proposed in connection with optical recording media in which data can be recorded by the user (See Japanese Patent Application Laid Open No. 2001-243655 etc.).

In this optical recording medium having two recording layers, each recording layer includes a recording film and dielectric films (protective films) sandwiching the recording film therebetween and two recording layers each having such a configuration are laminated via an intermediate layer.

A recording film of a data rewritable type optical recording medium is formed of a phase change material and data are recorded in the data rewritable type optical recording medium by utilizing difference in reflectivity between the case where the phase change material is in a crystal phase and the case where it is in an amorphous phase.

More specifically, in the case where no data are recorded in the recording film, the entire surface of the recording film is in the crystalline state and the phase of the recording film is locally changed to the amorphous state, thereby recording data in the recording film. In order to change the phase of the phase change material in the crystalline state to the amorphous state, the phase change material is heated to a temperature equal to or higher than the melting point thereof and quickly cooled. On the other hand, in order to change the phase of the phase change material in the amorphous state to the crystalline state, the phase change material is heated to a temperature equal to or higher than the crystallized temperature thereof and gradually cooled.

The phase change material forming the recording film is heated and cooled by adjusting the power of a laser beam projected onto the recording film. More specifically, data can be recorded in the recording film in which no data are recorded and data recorded in a region of the recording film can be directly overwritten with different data by modulating the power of the laser beam. The general practice is to control the power of the laser beam so as to heat the recording film to a temperature equal to or higher than the melting point thereof in accordance with a pulse wave form having amplitudes between a recording power (Pw) and a bottom power (Pb) and to set the power of the laser beam to the bottom power (Pb) in order to quickly cool the recording film. Further, in order to heat the recording film to a temperature equal to or higher than the melting point thereof and gradually cool it, the power of the laser beam is set to an erasing power (Pe).

In a data rewritable type optical recording medium having two recording layers, since data are recorded in one of the recording layers and data are reproduced from one of the recording layers by focusing the laser beam onto one the recording layers, when data are to be recorded in a recording layer far from an light incidence plane (hereinafter referred to as "an L1 layer") and data are to be reproduced from the L1 layer, a laser beam is projected onto L1 layer via a recording layer close to the light incidence plane (hereinafter referred to as "an L0 layer").

Therefore, it is necessary for the L0 layer to have high light transmittance and it is necessary for a reflective film formed in the L0 layer to be made thin.

However, the thinner the reflective film included in the L0 layer is made, the more difficult it is to radiate heat generated in the recording film included in the L0 layer by heating the recording film with a laser beam projected thereonto when data are recorded. On the other hand, the thicker the reflective film is made for enhancing the heat radiation characteristic thereof, the lower the light transmittance of the L0 layer becomes.

In the case where the L0 layer does not have a sufficiently high heat radiation characteristic, it is difficult to quickly cool the L0 layer when the phase of the phase change material of the recording film of the L0 layer is to be changed to the amorphous state to record data in the L0 layer, whereby a reproduced signal having a good C/N ratio (carrier/noise ratio) cannot be obtained and jitter of the reproduced signal becomes worse. On the other hand, in the case where the L0 layer has sufficiently high light transmittance, the intensity of a laser beam reaching the L1 layer becomes lower and the data recording characteristics and reproducing characteristics of the L1 layer becomes worse.

Thus, it is difficult to simultaneously improve the data recording characteristics and reproducing characteristics of the L0 layer and the data recording characteristics and reproducing characteristics of the L1 layer.

The same problem occurs not only in the case where the L1 layer is constituted as a data rewritable type recording layer but also in the case where the L1 layer is constituted as a recording layer only for reading data and it is also difficult in an optical recording medium for only reading data to simultaneously improve the data recording characteristics and reproducing characteristics of the L0 layer and the data recording characteristics and reproducing characteristics of the L1 layer.

### SUMMARY OF THE INVENTION

It is therefore an object of the present invention to provide a data rewritable type optical recording medium which includes a plurality of recording layers and in which data reading characteristics and reproducing characteristics of the respective recording layers can be improved.

The above object of the present invention can be accomplished by an optical recording medium which comprises a support substrate, a plurality of recording layers formed on the support substrate and a transparent intermediate layer(s) formed between the plurality of recording layers and is constituted so that data can be recorded therein and/or reproduced therefrom by a laser beam projected through a light incidence plane, in which optical recording medium a recording layer other than a recording layer farthest from the light incidence plane among the plurality of recording layers is constituted so as to be able to rewrite data and comprises at least a recording film, a first dielectric film disposed in contact with the recording film on a side thereof on which the light incidence plane is present, a second dielectric film disposed in contact with the recording film on a side thereof opposite to the side on which the light incidence plane is present and having a thickness smaller than 15 nm, a transparent heat radiation film disposed in contact with the first dielectric film on a side thereof on which the light incidence plane is present, a translucent reflective film disposed in contact with the second dielectric film on a side thereof opposite to the side on which the light incidence plane is present and having a thickness smaller than 20 nm, and a base protect film disposed between the translucent reflective film and the transparent intermediate layer.

In the present invention, it is sufficient for the optical recording medium to include two or more data rewritable recording films and the optical recording medium may further include one or more recording layers for only reading data in addition to these data rewritable recording films.

According to the present invention, since the second dielectric film included in the data rewritable recording layer among recording layers other than the recording layer farthest from the light incidence plane has a thickness smaller than 15 nm, heat generated in the recording film by a laser beam projected thereonto when data are to be recorded can be quickly transmitted to the translucent reflective film having high heat radiation characteristics via the second dielectric film to be radiated thereby. Therefore, since the heat radiation characteristics of the recording layer can be improved, the heated recording layer can be quickly cooled, whereby the C/N ratio (carrier/noise ratio) of a signal can be improved and jitter thereof can be reduced.

Further, according to the present invention, since the translucent reflective film included in the data rewritable recording layer among recording layers other than the recording layer farthest from the light incidence plane has a thickness smaller than 20 nm, the light transmittance of the recording layer can be maintained high. Therefore, since it is possible to maintain the intensity of the laser beam reaching the recording layer farthest from the light incidence plane sufficiently high, it is possible to improve the data recording characteristics and reproducing characteristics of the recording layer farthest from the light incidence plane.

Furthermore, according to the present invention, since the base protect film is provided between the transparent intermediate layer and the translucent reflective film included in the recording layer other than the recording layer farthest from the light incidence plane, even in the case where the second dielectric film has a thickness smaller than 15 nm and the translucent reflective film has a thickness smaller than 20 nm, it is possible to prevent the transparent intermediate layer from being damaged by heat and it is therefore possible to improve the repeated data rewriting characteristics of the recording layer other than the recording layer farthest from the light incidence plane.

In the present invention it is preferable to form the second dielectric film so as to have a thickness of 1 nm to 10 nm. In the case where the second dielectric film is formed so as to have a thickness of 1 nm to 10 nm, it is possible to more quickly transmit heat from the recording film to the translucent reflective film to be radiated and reliably separate the recording film and the translucent reflective film physically.

In the present invention, it is preferable to form the translucent reflective film so as to have a thickness equal to or larger than 4 nm. In the case where the translucent reflective film is formed so as to have a thickness equal to or larger than 4 nm, it is possible to improve the heat radiation characteristics of the translucent reflective film and it is therefore possible to improve the heat radiation characteristics of the recording layer, while the light transmittance of the recording layer is maintained high.

In the present invention, it is preferable to form the translucent reflective film of metal and more preferable to form it of Ag.

In the present invention, it is preferable to form the translucent reflective film of a material having a higher thermal conductivity than that used for forming the first dielectric film. In the case where the translucent reflective film is formed of a material having a higher thermal conductivity than that used for forming the first dielectric film, the heat radiation characteristics of the recording layer can be improved.

In the present invention, it is preferable for the translucent reflective film to contain AlN or SiC as a primary component. AlN and SiC (particularly AlN) have a relatively high thermal conductivity and high light transmittance with respect to a laser beam having a wavelength equal to or shorter than 500 nm, so that in the case where the translucent reflective film contains AlN or SiC as a primary component, it is possible to more effectively increase the heat radiation characteristics of the recording layer.

### BRIEF DESCRIPTION OF THE DRAWINGS

Figure 1 is a schematic cross-sectional view showing the structure of an optical recording medium that is a preferred embodiment of the present invention.
Figure 2 is a diagram showing a step of a method for manufacturing an optical recording medium that is a preferred embodiment of the present invention.
Figure 3 is a diagram showing a step of a method for manufacturing an optical recording medium that is a preferred embodiment of the present invention.
Figure 4 is a diagram showing a step of a method for manufacturing an optical recording medium that is a preferred embodiment of the present invention.
Figure 5 is a diagram showing a step of a method for manufacturing an optical recording medium that is a preferred embodiment of the present invention.
Figure 6 is a diagram showing a write strategy used for recording data in an L0 recording film and an L1 recording film and particularly showing a write strategy used for forming a 4T signal therein.
Figure 7 is a graph showing results of a characteristic comparing test 1.
Figure 8 is a graph showing results of a characteristic comparing test 3.

### DESCRIPTION OF THE PREFERRED EMBODIMENTS

A preferred embodiment of the present invention will now be described with reference to accompanying drawings.

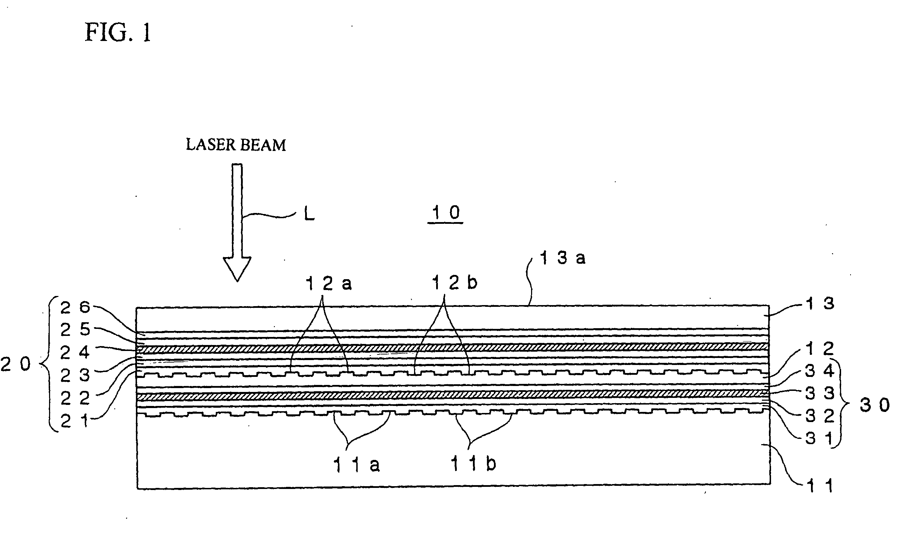

Figure 1 is a schematic cross-sectional view showing the structure of an optical recording medium that is a preferred embodiment of the present invention.

As shown in Figure 1, the optical recording medium 10 according to this embodiment includes a disk-like support substrate 11, a transparent intermediate layer 12, a light transmission layer 13, an L0 layer 20 formed between the transparent intermediate layer 12 and the light transmission layer 13, and an L1 layer 30 formed between the support substrate 11 and the transparent intermediate layer 12.

The L0 layer 20 and the L1 layer 30 are recording layers in which data are to be recorded and the optical recording medium 10 according to this embodiment includes two recording layers.

The L0 layer 20 constitutes a recording layer close to a light incidence plane 13a and is constituted by laminating a base protect film 21, a translucent reflective film 22, a second dielectric film 23, an L0 recording film 24, a first dielectric film 25 and a transparent heat radiation film 26 from the side of the support substrate 11 in this order.

On the other hand, the L1 layer 30 constitutes a recording layer far from the light incidence plane 13a and is constituted by laminating a reflective film 31, a fourth dielectric film 32, an L1 recording film 33 and a third dielectric film 34 from the side of the support substrate 11 in this order.

When data are to be recorded in the L1 layer 30 and data recorded in the L1 layer 30 are to be reproduced, a laser beam L is projected onto the L1 layer 30 via the L0 layer 20 disposed close to the light incidence plane 13a.

Therefore, it is necessary for the L0 layer 20 to have high light transmittance. Concretely, it is necessary for the L0 layer 20 to have light transmittance equal to or higher than 30 % with respect to a laser beam of the wavelength used for recording and reproducing data and the L0 layer 20 more preferably has light transmittance equal to or higher than 40 % with respect to the laser beam.

In order to record data at high density, it is necessary to reduce the diameter of the laser beam to a small size. Therefore, it is preferable for the laser beam used for recording data and reproducing data to have a wavelength equal to or shorter than 500 mm and it is more preferable for it to have a wavelength of 200 nm to 450 nm.

The support substrate 11 serves as a support for ensuring mechanical strength required for the optical recording medium 10.

The material used to form the substrate 11 is not particularly limited insofar as the support substrate 11 can serve as the support of the optical recording medium 10. The support substrate 11 can be formed of glass, ceramic, resin or the like. Among these, resin is preferably used for forming the support substrate 11 since resin can be easily shaped. Illustrative examples of resins suitable for forming the support substrate 11 include polycarbonate resin, acrylic resin, epoxy resin, polystyrene resin, polyethylene resin, polypropylene resin, silicone resin, fluoropolymers, acrylonitrile butadiene styrene resin, urethane resin and the like. Among these, polycarbonate resin is most preferably used for forming the support substrate 11 from the viewpoint of easy processing, optical characteristics and the like and in this embodiment, the support substrate 11 is formed of polycarbonate resin. In this embodiment, since the laser beam L is projected onto the optical recording medium 11 via the light incidence plane 13a located on the opposite side of the support substrate 11, it is unnecessary for the support substrate 11 to have light transmittance.

In this embodiment, the support substrate 11 has a thickness of about 1.1 mm.

As shown in Figure 1, grooves 11a and lands 11b are alternately formed on the surface of the support substrate 11. The grooves 11a and/or lands 11b serve as a guide track for the laser beam L when data are to be recorded or when data are to be reproduced.

The depth of the groove 11a is not particularly limited but it is preferably set to 10 nm to 40 nm. The pitch of the grooves 11a is not particularly limited but it is preferably set to 0.2 µm to 0.4 µm.

The transparent intermediate layer 12 serves to space the L0 layer 20 and the L1 layer 30 apart by a physically and optically sufficient distance.

As shown in Figure 1, grooves 12a and lands 12b are alternately formed on the surface of the transparent intermediate layer 12. The grooves 12a and/or lands 12b formed on the surface of the transparent intermediate layer 12 serve as a guide track for the laser beam L when data are to be recorded or when data are to be reproduced.

The depth of the groove 12a and the pitch of the grooves 12a can be set to be substantially the same as those of the grooves 11a formed on the surface of the support substrate 11.

It is preferable to form the transparent intermediate layer 12 so as to have a thickness of 10 µm to 50 µm and it is more preferable to form it so as to have a thickness of 15 µm to 40 µm.

The material for forming the transparent intermediate layer 12 is not particularly limited and an ultraviolet ray curable acrylic resin is preferably used for forming the transparent intermediate layer 12.

It is necessary for the transparent intermediate layer 12 to have sufficiently high light transmittance since the laser beam L passes through the transparent intermediate layer 12 when data are to be recorded in the L1 layer 30 and data recorded in the L1 layer 30 are to be reproduced.

The light transmission layer 13 serves to transmit the laser beam L and the light incident plane 13a is constituted by one of the surfaces thereof.

It is preferable to form the light transmission layer 13 so as to have a thickness of 30 µm to 200 µm.

The material for forming the light transmission layer 13 is not particularly limited and, similarly to the transparent intermediate layer 12, an ultraviolet ray curable acrylic resin is preferably used for forming the light transmission layer 13.

It is necessary for the light transmission layer 13 to have sufficiently high light transmittance since the laser beam L passes through the transparent intermediate layer 13 when data are to be recorded in the optical recording medium 10 and data are to be recorded from the optical recording medium 10.

Each of the L0 recording film 24 of the L0 layer 20 and the L1 recording film 33 of the L1 layer 30 is formed of a phase change material. Utilizing the difference in the reflection coefficients between the case where the L0 recording film 24 and the L1 recording film 33 are in a crystal phase and the case where they are in an amorphous phase, data are recorded in the L0 recording film 24 and the L1 recording film 33 and data are reproduced from the L0 recording film 24 and the L1 recording film 33.

The material for forming the L0 recording film 24 and the L1 recording film 33 is not particularly limited but a material capable of changing from an amorphous phase to a crystal phase in a short time is preferable in order to enable direct overwriting of data at a high velocity. Illustrative examples of materials having such a characteristic include a SbTe system material.

As the SbTe system material, SbTe may be used alone or a SbTe system material to which additives are added in order to shorten the time required for crystallization and improve the long-term storage reliability of the optical recording medium 10 may be used.

Concretely, it is preferable to form the L0 recording film 24 and the L1 recording film 33 of a SbTe system material represented by the compositional formula: (SbₓTe₁₋ₓ)_{1-y}M_{y}, where M is an element other than Sb and Te, x is equal to or larger than 0.55 and equal to or smaller than 0.9 and y is equal to or larger than 0 and equal to or smaller than 0.25, and it is more preferable to form the L0 recording film 24 and the L1 recording film 33 of a SbTe system material represented by the above mentioned compositional formula wherein x is equal to or larger than 0.65 and equal to or smaller than 0.85 and y is equal to or larger than 0 and equal to or smaller than 0.25.

While M is not particularly limited, it is preferable for the element M to be one or more elements selected from the group consisting of In, Ag, Au, Bi, Se, Al, P, Ge, H, Si, C, V, W, Ta, Zn, Mn, Ti, Sn, Pd, N, O and rare earth elements in order to shorten the time required for crystallization and improve the storage reliability of the optical recording medium 10. It is particularly preferable for the element M to be one or more elements selected from the group consisting of Ag, In, Ge and rare earth elements for improving the storage reliability of the optical recording medium 10.

Since the laser beam L passes through the L0 recording film 24 when data are to be recorded in the L1 layer 30 and data recorded in the L1 layer 30 are to be reproduced, it is necessary for the L0 recording film 24 to have a high light transmittance and it is therefore preferable to form the L0 recording film 24 so as to be thinner than the L1 recording film 33.

Concretely, it is preferable to form the L1 recording film 33 so as to have a thickness of 3 nm to 20 nm and form the L0 recording film 24 so as to have a thickness of 3 nm to 10 nm.

In the case where the thicknesses of the L0 recording film 24 and the L1 recording film 33 are thinner than 3 nm, the L0 recording film 24 and the L1 recording film 33 do not readily crystallize because a phase change material does not crystallize easily if it is formed extremely thin. On the other hand, in the case where the thickness of the L0 recording film 24 exceeds 10 nm, the light transmittance of the L0 recording film 24 is lowered and the data recordability to the L1 layer 30 and the data reproducibility from the L1 layer 30 are degraded.

Further, the L0 recording film 24 is preferably formed so as to have a thickness 0.3 times to 0.8 times the thickness of the L1 recording film 33.

The first dielectric film 25 and the second dielectric film 23 serve as protective layers for protecting the L0 recording film 24 and the third dielectric film 34 and the fourth dielectric film 32 serve as protective layers for protecting the L1 recording film 33.

The thickness of the first dielectric film 25 is not particularly limited but it is preferable for the first dielectric film 25 to have a thickness of 1 nm to 50 nm. In the case where the first dielectric film 25 is thinner than 1 nm, the first dielectric film 25 is cracked during an initialization process described later and the characteristic, namely, the repeated overwriting characteristic, of the optical recording medium 10 when direct overwriting is repeated is degraded. On the other hand, in the case where the first dielectric film 25 is thicker than 50 nm, since the distance between the L0 recording film 24 and the transparent heat radiation film 26 becomes longer, sufficient heat radiation effect by the transparent heat radiation film 26 cannot be obtained.

It is preferable for the thickness of the second dielectric film 23 to be as thin as possible so that heat generated in the L0 recording film 24 by irradiation with a laser beam L when data are to be recorded can be quickly transmitted to the translucent reflective film 22 to be radiated, thereby enhancing the heat radiation characteristic. It is therefore necessary to form the second dielectric film 23 to have a thickness smaller than 15 nm. It is preferable to form the second dielectric film 23 to have a thickness of 1 nm to 10 nm and more preferable to form it to have a thickness of about 3 nm.

In the case where the second dielectric film 23 has a thickness equal to or larger than 15 nm, since the distance between the L0 recording film 24 and the translucent reflective film 22 is long, heat generated in the L0 recording film 24 by irradiation with a laser beam L when data are to be recorded cannot be quickly transmitted to the translucent reflective film 22 to be radiated. Therefore, since the heat radiation characteristic of the translucent reflective film 22 cannot sufficiently be utilized, it is difficult to quickly cool the L0 recording film 24 so as to change the phase thereof to the amorphous state, whereby a reproduced signal having a good C/N ratio (carrier/noise ratio) cannot be obtained and jitter of the reproduced signal becomes worse.

On the other hand, in the case where the second dielectric film 23 has a thickness smaller than 1 nm, since the L0 recording film 24 and the translucent reflective film 22 cannot be sufficiently separated physically, there is a risk of materials forming the L0 recording film 24 and the translucent reflective film 22 mixing when data are to be recorded or during an initialization process described later.

To the contrary, the thickness of the third dielectric film 34 included in the L1 layer 30 is not particularly limited but it is preferable to form the third dielectric film 34 so as to have a thickness of 1 nm to 200 nm.

The thickness of the fourth dielectric film 32 included in the L1 layer 30 is not particularly limited but it is preferable to form the fourth dielectric film 32 so as to have a thickness of 1 nm to 50 nm.

The first dielectric film 25, the second dielectric film 23, the third dielectric film 34 and the fourth dielectric film 32 may have a single-layered structure or may have a multi-layered structure including a plurality of dielectric films. For example, if the first dielectric film 25 is constituted by two dielectric films formed of materials having different refractive indexes, light interference effect can be increased.

The material for forming the first dielectric film 25, the second dielectric film 23, the third dielectric film 34 and the fourth dielectric film 32 is not particularly limited but it is preferable to form the first dielectric film 25, the second dielectric film 23, the third dielectric film 34 and the fourth dielectric film 32 of oxide, sulfide, nitride, carbide of Si, Al, Ta, Zn, Ce, Ti and the like such as SiO₂, Si₃N₄, Al₂O₃, AlN, TaO, ZnS, CeO₂ and the like or a combination thereof and it is more preferable for them to contain a dielectric material of ZnS•SiO₂ as a primary component. ZnS• SiO₂ means a mixture of ZnS and SiO₂.

The translucent reflective film 22 included in the L0 layer 20 serves to reflect the laser beam L entering through the light incident plane 13a so as to emit it from the light incident plane 13a and effectively radiate heat generated in the L0 recording film 24 by the irradiation with the laser beam L.

The L0 layer 20 has high light transmittance so that a laser beam L having sufficient intensity can reach the L1 layer 30 and it is therefore necessary for the translucent reflective film 22 to have a thickness smaller than 20 nm.

On the other hand, it is necessary for the translucent reflective film 22 to have a high heat radiation characteristic and it is preferable to form the translucent reflective film 22 so as to have a thickness equal to or thicker than 4 nm and thinner than 20 nm and more preferably to form it so as to have a thickness of 5 nm to 15 nm.

The material for forming the translucent reflective film 22 is not particularly limited but it is preferable to form the translucent reflective film 22 of metal such as Ag, Al or the like having high thermal conductivity and particularly preferable to form it of Ag having the highest thermal conductivity

Further, it is more preferable to use Ag as a primary component of the translucent reflective film 22 and add an element(s) such as Au, Cu, Pt, Pd, Sb, Ti, Mg or the like having a property of improving corrosion resistance. However, if the amount of the additive(s) is too large, the thermal conductivity of the translucent reflective film 22 is lowered, so that the total amount of the additive(s) is preferably equal to or smaller than 4 atomic %.

The base protect film 21 serves to physically separate the translucent reflective film 22 and the transparent intermediate layer 12, thereby preventing the transparent intermediate layer 12 from being damaged by heat.

More specifically, in this embodiment, the second dielectric film 23 included in the L0 layer 20 has a thickness smaller than 15 nm and is very thin and the translucent reflective film 22 has a thickness smaller than 20 nm and is very thin. As a result, when a laser beam L is projected onto the L0 layer 20, the temperature of the translucent reflective film 22 locally increases quickly. Therefore, if the translucent reflective film 22 and the transparent intermediate layer 12 should be in direct contact with each other, the transparent intermediate layer 12 would be damaged by heat and the interface between itself and the translucent reflective film 22 be degraded, whereby data recording characteristics and reproducing characteristics of the L0 layer 20 would become worse.

Therefore, in this embodiment, the base protect film 21 is provided, thereby preventing the transparent intermediate layer 12 from being damaged by heat and the data recording characteristics and reproducing characteristics of the L0 layer 20 from being lowered.

The thickness of the base protect film 21 is not particularly limited but it is preferable to form the base protect film 21 so as to have a thickness of 2 nm to 150 nm. In the case where the base protect film 21 has a thickness smaller than 2 nm, it is impossible to sufficiently prevent the transparent intermediate layer from being damaged by heat and, on the other hand, in the case where the base protect film 21 has a thickness larger than 150 nm, a long time is required for forming the base protect film 21, thereby lowering the productivity of the optical recording medium 10,and the base protect film 21 becomes somewhat susceptible to cracking due to internal stress.

The base protect film 21 can be formed of a material similar to that used for forming the first dielectric film 25 or the like.

The transparent heat radiation film 26 serves to increase the heat radiation characteristic of the L0 layer 20. The transparent heat radiation film 26 can be formed of the material used for forming the first dielectric film 25 or the like but it is necessary to form the transparent heat radiation film 26 of a material having higher thermal conductivity than that of the material used for forming the first dielectric film 25 adjacent thereto.

Therefore, in the case where the first dielectric film 25 and the transparent heat radiation film 26 are formed of a material selected from a group consisting of AlN, SiC, Al₂O₃, SiO₂ and ZnS•SiO₂, for example, since the thermal conductivities of AlN and SiC are highest, the thermal conductivity of Al₂O₃ and SiO₂ are second highest and ZnS•SiO₂ is lowest, although they depend upon film forming conditions, when the first dielectric film 25 is formed of ZnS•SiO₂, it is necessary to form the transparent heat radiation film 26 of AlN, SiC, Al₂O₃ or SiO₂ and it is preferable to form it of AlN or SiC. Particularly, when the transparent heat radiation film 26 is formed of AlN, it is possible to easily form it to have high thermal conductivity using the sputtering process and the thus formed transparent heat radiation film 26 has high light transmittance with respect to a laser beam having a wavelength shorter than 500 nm. Therefore, it is most preferable to form the transparent heat radiation film 26 of AlN.

The thickness of the transparent heat radiation film 26 is not particularly limited but it is preferable to form the transparent heat radiation film 26 so as to have a thickness of 10 nm to 200 nm. In the case where the transparent heat radiation film 26 has a thickness smaller than 10 nm, it is impossible to increase the heat radiation characteristics of the L0 layer 20 and on the other hand, in the case where the transparent heat radiation film 26 has a thickness larger than 200 nm, a long time is required for forming the transparent heat radiation film 26, thereby lowering the productivity of the optical recording medium 10 and the transparent heat radiation film 26 becomes somewhat susceptible to cracking due to internal stress.

A dielectric film having a refractive index different from that of the transparent heat radiation film 26 may be formed between the transparent heat radiation film 26 and the light transmission layer 13. If such a dielectric film is formed between the transparent heat radiation film 26 and the light transmission layer 13, it is possible to obtain larger light interference effect.

The reflective film 31 included in the L1 layer serves to reflect the laser beam L entering the light incident plane 13a so as to emit it from the light incident plane 13a and effectively radiate heat generated in the L1 recording film 33 by the irradiation with the laser beam L.

It is preferable to form the reflective film 31 so as to have a thickness of 20 nm to 200 nm. In the case where the reflective film 31 has a thickness smaller than 20 nm, sufficient heat radiation characteristic cannot be obtained and on the other hand, in the case where the reflective film 31 has a thickness larger than 20 nm, a long time is required for forming the reflective film 31, thereby lowering the productivity of the optical recording medium 10 and the reflective film 31 becomes somewhat susceptible to cracking due to internal stress.

The material for forming the reflective film 31 is not particularly limited and the reflective film 31 can be formed of a material similar to that used for forming the translucent reflective film 22.

Further, for preventing the reflective film 31 from being corroded, a film having a moisture-proof property may be formed between the reflective film 31 and the support substrate 11 of a material similar to that used for forming the first dielectric film 25 or the like.

The optical recording medium 10 having the above-described configuration can, for example, be fabricated in the following manner.

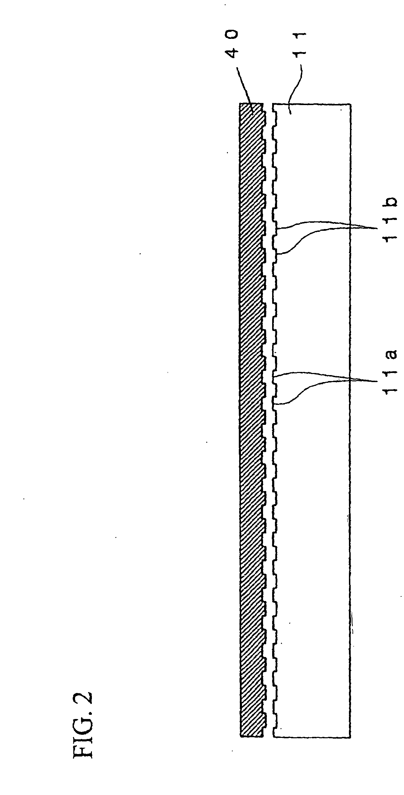

Figures 2 to 5 show the steps of a method for fabricating the optical recording medium 10 according to this embodiment.

As shown in Figure 2, the support substrate 11 having grooves 11a and lands 11b on the surface thereof is first fabricated by an injection molding process using a stamper 40.

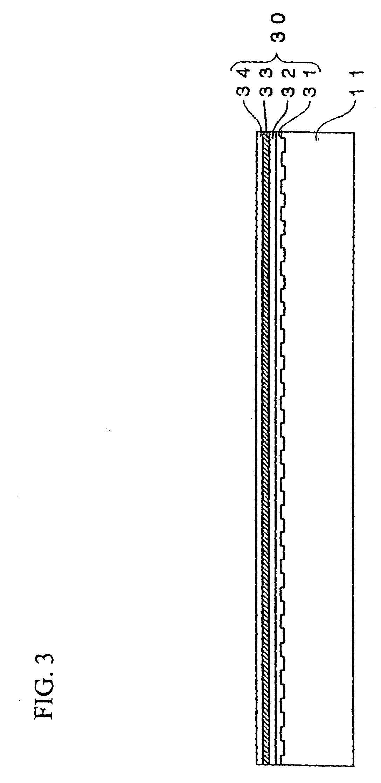

Then, as shown in Figure 3, the reflective film 31, the fourth dielectric film 32, the L1 recording film 33 and the third dielectric film 34 are sequentially formed on the substantially entire surface of the support substrate 11 on which the grooves 11a and the lands 11b are formed by a gas phase growth process such as a sputtering process, thereby forming the L1 layer 30. The L1 recording film 33 is normally in an amorphous state immediately after formation by a sputtering process or the like.

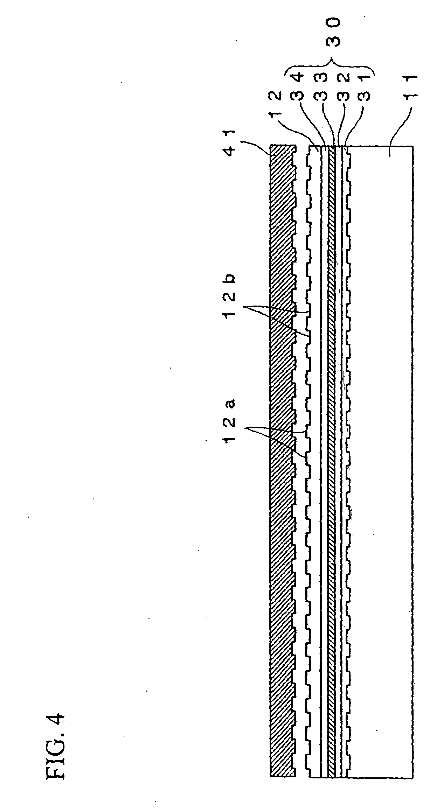

Further, as shown in Figure 4, an ultraviolet ray curable resin is coated on the L1 layer 30 by a spin coating method to form a coating film and the surface of the coating film is irradiated with an ultraviolet ray via a stamper 41 while it is covered by the stamper 41, thereby forming the transparent intermediate layer 12 formed with grooves 12a and lands 12b on the surface thereof.

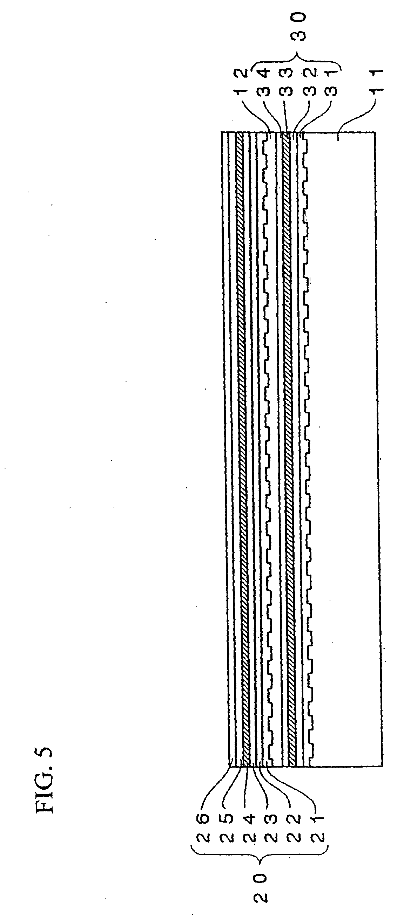

Then, as shown in Figure 5, the base protect film 21, the translucent reflective film 22, the second dielectric film 23, the L0 recording film 24, the first dielectric film 25 and the transparent heat radiation film 26 are sequentially formed on substantially the entire surface of the transparent intermediate layer 12 on which the grooves 12a and the lands 12b are formed, by a gas phase growth process such as a sputtering process, thereby forming the L0 layer 20. The L0 recording film 24 is normally in an amorphous state immediately after formation by a sputtering process or the like.

An ultraviolet ray curable resin is further coated on the L0 layer 20 by a spin coating method to form a coating film and the surface of the coating film is irradiated with an ultraviolet ray, thereby forming the light transmission layer 13.

This completes the fabrication of the optical recording medium 10.

The optical recording medium 10 is then set on a rotatable table of a laser illumination apparatus (not shown) and while the rotatable table is being rotated, the optical recording medium 10 is continuously irradiated with a laser beam L having such a rectangular beam cross-section whose length is short in the direction along a track (circumferential direction of the optical recording medium) and whose length is long in a direction perpendicular to the track (radial direction of the optical recording medium) in such a manner that the position irradiated with the laser beam is dislocated in a direction perpendicular to the track every rotation of the optical recording medium 10, thereby irradiating substantially the entire surfaces of the L0 recording film 24 and the L1 recording film 33 with the laser beam L of rectangular cross-section.

As a result, the phase change material contained in the L0 recording film 24 and the L1 recording film 33 is heated to a temperature equal to or higher than the crystallization temperature thereof and then gradually cooled, whereby substantially the entire surfaces of the L0 recording film 24 and the L1 recording film 33 are crystallized. In this specification, this process is referred to as "an initialization process". In this state, no data are recorded in the L0 recording film 24 and the L1 recording film 33 and the L0 recording film 24 and the L1 recording film 33 are in an unrecorded state.

When the initialization process has been completed in this manner, there is obtained an optical recording medium 10 having the L0 recording film 24 and the L1 recording film 33 in which no data are recorded.

When data are to be recorded in the thus constituted optical recording medium 10, the light incident plane 13a of the light transmission layer 13 is irradiated with a laser beam L whose intensity is modulated and the focus of the laser beam L is adjusted onto the L0 recording film 24 or the L1 recording film 33.

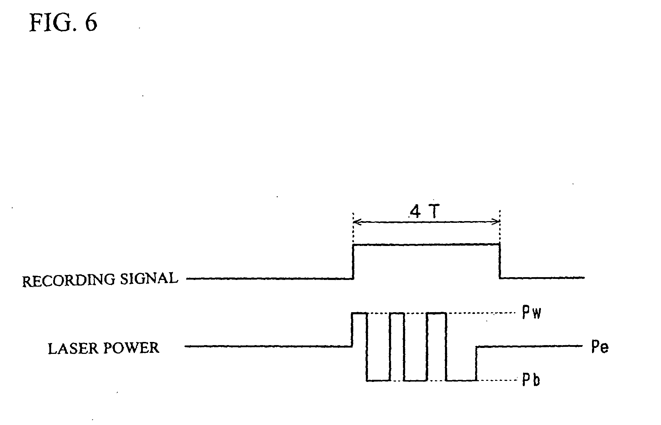

A method for controlling the power of the laser beam L when data are to be recorded is called a "write strategy" and Figure 6 is a diagram showing a write strategy used for recording data in an L0 recording film and an L1 recording film and particularly showing a write strategy used for forming a 4T signal therein.

As shown in Figure 6, when data are to be recorded in the L0 recording film 24 or the L1 recording film 33, the power of the laser beam L is modulated to one of three levels of a recording power (Pw), an erasing power (Pe) and a bottom power (Pb).

The recording power (Pw) is set to such high level that the L0 recording film 24 or the L1 recording film 33 can be molted when it is irradiated with the laser beam L and the erasing power (Pe) is set to such a level that the L0 recording film 24 or the L1 recording film 33 can be heated to a temperature equal to or higher than the crystallized temperature thereof when it is irradiated with the laser beam L. On the other hand, the bottom power (Pb) is set to such a low level that the molten L0 recording film 24 or L1 recording film 33 can be cooled even when it is irradiated with the laser beam L.

When data are to be recorded in a region of the L0 recording film 24 or the L1 recording film 33, a laser beam L whose power is set to the recording power (Pw) is projected onto the region of the L0 recording film 24 or the L1 recording film 33, whereby the region of the L0 recording film 24 or the L1 recording film 33 is melted. Then, the power of the laser beam L is controlled to the bottom power (Pb), whereby the molten region of the L0 recording film 24 or the L1 recording film 33 is quickly cooled. On the other hand, the laser beam L whose power is set to the erasing power (Pe) is projected onto other regions of the L0 recording film 24 or the L1 recording film 33, whereby the regions of the L0 recording film 24 or the L1 recording film 33 are heated to a temperature equal to or higher than the crystallized temperature thereof and the laser beam L is then moved away from the regions of the L0 recording film 24 or the L1 recording film 33, whereby the regions are gradually cooled.

In this manner, the phase of the region of the L0 recording film 24 or the L1 recording film 33 which was melted by the laser beam L and quickly cooled is changed to the amorphous state and the regions of the L0 recording film 24 or the L1 recording film 33 which were heated to a temperature equal to or higher than the crystallized temperature thereof and gradually cooled are crystallized, whereby data are recorded in the L0 recording film 24 or the L1 recording film 33.

Data are constituted by the length of the amorphous region or the length of the crystallized region. The length of each of the amorphous regions or the crystallized regions is not particularly limited but in the case where (1,7)RLL modulation code is employed, it is set to one of lengths corresponding to 2*T* to 8*T* where *T* is a clock cycle.

In this manner, data can be overwritten by modulating the power of the laser beam in accordance with the write strategy.

Here, it is sufficient to generate considerable difference in reflectivity between a region whose phase has been changed to the amorphous state and a crystallized region and the reflectivity of the region may lower or increase when the phase thereof is changed to the amorphous state. However, considering the address pit calling and servo characteristics, it is preferable for the reflectivity of the region to decrease when the phase thereof is changed to the amorphous state.

On the other hand, when data recorded in the optical recording medium 10 are to be reproduced, a laser beam L is projected via the light incidence plane 13a onto the optical recording medium 10 and the amount of the laser beam L reflected form the optical recording medium 10 is detected. Since each of the L0 recording film 24 and the L1 recording film 33 is formed of a phase change material and the reflectivity thereof with respect to the laser beam L is different between the case where it is in the amorphous state and the case where it is in the crystalline state, data recorded in the L0 recording film 24 or the L1 recording film 33 can be reproduced by focusing the laser beam L onto one of the L0 recording film 24 and the L1 recording film 33 via the light incidence plane 13a and detecting an amount of the laser beam L reflected therefrom.

According to the above described embodiment, since the second dielectric film 23 disposed between the L0 recording film 24 and the translucent reflective film 22 has a thickness smaller than 15 nm, heat generated in the L0 recording film 24 by projecting the laser beam L thereonto when data are to be recorded can be quickly transmitted to the translucent reflective film 22 formed of a metal such as Ag via the thin second dielectric film 23. Therefore, since the L0 layer 20 has high heat radiation characteristics and the L0 recording film 24 can be heated by the laser beam L and quickly cooled in a desired manner, it is possible to increase the C/N ratio (carrier/noise ratio) of a reproduced signal and reduce jitter thereof.

Further, according to above described embodiment, since the translucent reflective film 22 is formed so as to have a thickness smaller than 20 nm, the L0 layer 20 has high light transmittance. Therefore, since it is possible to maintain the power of the laser beam L reaching the L1 layer 30 sufficiently high, the data recording characteristics and reproducing characteristics of the L1 layer 30 can be improved.

Furthermore, according to above described embodiment, since the transparent heat radiation film 26 is formed of a material having higher thermal conductivity than that of the first dielectric film 25 and to be in contact with the first dielectric film 25, heat generated in the L0 recording film 24 by projecting the laser beam L thereonto when data are to be recorded can be quickly radiated by the translucent reflective film 22. Therefore, since the L0 layer 20 has high heat radiation characteristics and the L0 recording film 24 can be heated by the laser beam L and quickly cooled in a desired manner, it is possible to increase the C/N ratio (carrier/noise ratio) of a reproduced signal and reduce jitter thereof.

Moreover, according to above described embodiment, since the base protect film 21 is formed between the translucent reflective film 22 and the transparent intermediate layer 12, even in the case where the translucent reflective film 22 included in the L0 layer 20 has a thickness smaller than 15 nm and the translucent reflective film 22 is formed so as to have a thickness smaller than 20 nm so that the L0 layer 20 can have high light transmittance and high heat radiation characteristics, it is possible to prevent the transparent intermediate layer 12 from being damaged by heat due to the laser beam L and it is therefore possible to improve the repeated overwriting characteristic of the L0 layer 20.

Hereinafter, working examples and comparative examples will be set out in order to further clarify the advantages of the present invention.

### Working Example 1

An optical recording medium sample was fabricated in the following manner.

A disk-like polycarbonate substrate having a thickness of 1.1 mm and a diameter of 120 mm and formed with grooves and lands on the surface thereof was first fabricated by an injection molding process so that the groove pitch was equal to 0.32 µm.

Then, a reflective film containing AgPdCu and having a thickness of 100 nm was formed on the surface of the polycarbonate substrate on which the grooves and lands were formed using a sputtering apparatus provided with a target containing 98 atomic % of Ag, 1 atomic % of Pd and 1 atomic % of Cu.

Further, a fourth dielectric film containing a mixture of ZnS and SiO₂ and having a thickness of 15 nm was formed on the surface of the reflective film using a sputtering apparatus provided with a target containing 80 mol% of ZnS and 20 mol% of SiO₂.

Then, an L1 recording film containing SbTeGe and having a thickness of 12 nm was formed on the surface of the fourth dielectric film using a sputtering apparatus provided with a target having an atomic composition of (Sb_{0.75}Te_{0.25})_{0.95}Ge_{0.05}.

Further, a dielectric film containing a mixture of ZnS and SiO₂ and having a thickness of 55 nm was formed on the surface of the L1 recording film using a sputtering apparatus provided with a target containing 80 mol% of ZnS and 20 mol% of SiO₂.

Then, a dielectric film containing Al₂O₃ and having a thickness of 30 nm was formed on the surface of the thus formed dielectric film using a sputtering apparatus provided with a target consisting of Al₂O₃.

Thus, a third dielectric film was formed by the dielectric film containing the mixture of ZnS and SiO₂ and the dielectric film containing Al₂O₃. Thus an L1 layer including the reflective film, the fourth dielectric film, the L1 recording film and the third dielectric film was formed.

Then, the polycarbonate substrate formed with the L1 layer was set in a spin coating apparatus and a resin solution obtained by dissolving acrylic ultraviolet curing resin in a solvent was discharged on the L1 layer while the polycarbonate substrate was being rotated, thereby forming a resin layer.

Further, the resin layer formed on the L1 layer was covered by a stamper formed with grooves and lands and an ultraviolet ray was projected onto the resin layer via the stamper to cure the resin layer, thereby forming a transparent intermediate layer having a thickness of 20 µm and formed with grooves and lands on the surface thereof so that the grove pitch was 0.32 µm.

Then, a base protect film containing Al₂O₃ and having a thickness of 5 nm was formed on the surface of the transparent intermediate layer using a sputtering apparatus provided with a target consisting of Al₂O₃.

Further, a translucent reflective film containing AgPdCu and having a thickness of 8 nm was formed on the surface of the base protect film using a sputtering apparatus provided with a target containing 98 atomic % of Ag, 1 atomic % of Pd and 1 atomic % of Cu.

Then, a second dielectric film containing Al₂O₃ and having a thickness of 3 nm was formed on the surface of the translucent reflective film using a sputtering apparatus provided with a target consisting of Al₂O₃.

Further, an L0 recording film containing SbTeGe and having a thickness of 7 nm was formed on the surface of the second dielectric film using a sputtering apparatus provided with a target having an atomic composition of (Sb_{0.75}Te_{0.25})_{0.95}Ge_{0.05}.

Then, a first dielectric film containing a mixture of ZnS and SiO₂ and having a thickness of 12 nm was formed on the surface of the L0 recording film using a sputtering apparatus provided with a target containing 80 mol% of ZnS and 20 mol% of SiO₂.

Further, a transparent heat radiation film consisting of AlN and having a thickness of 48 nm was formed on the first dielectric film using a sputtering apparatus provided with a target consisting of AlN.

Thus, the L0 layer including the base protection film, the translucent reflective film, the second dielectric film, the L0 recording film, the first dielectric film and the transparent heat radiation film was formed.

Then, the polycarbonate substrate formed with the L1 layer, the transparent intermediate layer and the L0 layer was set in a spin coating apparatus and a resin solution obtained by dissolving acrylic ultraviolet curing resin in a solvent was discharged on the L0 layer while the polycarbonate substrate was being rotated, thereby forming a resin layer. Further, an ultraviolet ray was projected onto the resin layer to cure the resin layer, thereby forming a light transmission layer having a thickness of 90 µm.

In this manner, the optical recording medium was fabricated. The thus fabricated optical recording medium was placed on a rotatable table of a laser projecting apparatus and an initialization process was effected on the optical recording medium to crystallize the entire surface of the L0 recording film and the L1 recording film, thereby obtaining the optical recording medium of Working Example 1.

### Working Example 2

An optical recording medium was fabricated similarly to Working Example 1 except that the second dielectric film was formed to have a thickness of 2 nm.

### Working Example 3

An optical recording medium was fabricated similarly to Working Example 1 except that the second dielectric film was formed so as to have a thickness of 7 nm.

### Working Example 4

An optical recording medium was fabricated similarly to Working Example 1 except that the second dielectric film was formed to have a thickness of 9 nm.

### Working Example 5

An optical recording medium was fabricated similarly to Working Example 1 except that the second dielectric film was formed have a thickness of 11 nm.

### Working Example 6

An optical recording medium of was fabricated similarly to Working Example 1 except that the transparent heat radiation film was formed of Al₂O₃.

### Comparative Example 1

An optical recording medium was fabricated similarly to Working Example 1 except that the second dielectric film was formed to have a thickness of 15 nm.

### Comparative Example 2

An optical recording medium was fabricated similarly to Working Example 1 except that the second dielectric film was formed to have a thickness of 19 nm.

### Comparative Example 3

An optical recording medium was fabricated similarly to Working Example 1 except that the second dielectric film was formed to have a thickness of 0.5 nm.

### Comparative Example 4

An optical recording medium was fabricated similarly to Working Example 1 except that no transparent heat radiation film was formed and the first dielectric film was formed to have a thickness of 60 nm.

### Comparative Example 5

An optical recording medium was fabricated similarly to Working Example 1 except that no base protect film was formed.

### Comparative Example 6

An optical recording medium was fabricated similarly to Working Example 1 except that the translucent reflective film was formed to have a thickness of 20 nm, the thickness of the transparent heat radiation film was varied within a range of 10 nm to 200 nm, the thickness of the first dielectric film was varied within a range of 1 nm to 50 nm, the thickness of the second dielectric film was varied within a range of 1 nm to 8 nm and the thickness of the base protect film was varied with in a range of 2 nm to 150 nm.

### Characteristic comparing test 1

Then, each of optical recording media fabricated in accordance with Working Examples 1 to 6 and Comparative Examples 1 to 6 was set in an optical recording medium evaluation apparatus "DDU1000" (Product Name) manufactured by Pulstec Industrial Co., Ltd. and data were optically recorded in each of them under the following conditions.

A blue laser beam having a wavelength of 405 nm was employed as a laser beam for recording data and an objective lens having a numerical aperture NA of 0.85 was employed so that the laser beam was condensed onto the L0 layer via the light transmission layer, thereby recording a random signal in the L0 layer under the following recording conditions.
Modulation Code: (1,7)RLL
Channel bit length: 0.13 µm
Linear recording velocity: 5.7 m/sec
Channel clock: 66 MHz

The write strategy shown in Figure 6 was employed, whereby the recording power (Pw) was set to 6.0 mW, the erasing power (Pe) was set to 2.5 mW and the bottom power (Pb) was set to 0.1 mW.

The recording of random signal was repeated on the same track ten times, namely, overwriting was effected on the same track ten times, and the recorded random signal was reproduced to measure clock jitter of the signal. The fluctuation σ of the reproduced signal was measured using a time interval analyzer and the clock jitter was calculated as σ/Tw, where Tw was one clock period.

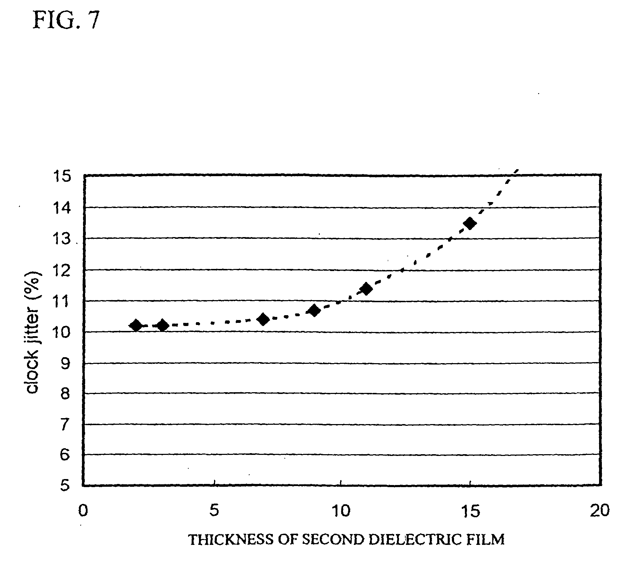

The results of the measurement are shown in Table 1 and Figure 7.

**Table 1**

| | Thickness of Second Dielectric Film (nm) | clock jitter (%) |
|---|---|---|
| Working Example 2 | 2 | 10.2 |
| Working Example 1 | 3 | 10.2 |
| Working Example 3 | 7 | 10.4 |
| Working Example 4 | 9 | 10.7 |
| Working Example 5 | 11 | 11.4 |
| Comparative Example 1 | 15 | 13.5 |
| Comparative Example 2 | 19 | 17.5 |
| Comparative Example 3 | 0.5 | not measurable |

As shown in Table 1 and Figure 7, it was found that in each of the optical recording media according to Working Examples 1 to 5, the value of clock jitter was equal to or lower than 13 %, the upper limit of the practical level, and became lower as the second dielectric film became thinner.

To the contrary, it was found that in each of the optical recording medium of Comparative Example 1 provided with the second dielectric film having a thickness of 15 nm and the optical recording medium of Comparative Example 2 provided with the second dielectric film having a thickness of 19 nm, the value of clock jitter exceeded 13 %, the upper limit of the practical level.

Further, in the optical recording medium of Comparative Example 3 provided with the second dielectric film having a thickness of 0.5 nm, clock jitter could not be measured. It reasonable to assume that this is because the materials forming the L0 recording film and the translucent reflective film were mixed with each other owing to irradiation with the laser beam and the signal could not be directly overwritten.

Therefore, it was found that it was necessary for the second dielectric film to have a thickness larger than 0.5 nm and smaller than 15 nm and that it was preferable to form; the second dielectric film thinner for reducing clock jitter.

### Characteristic comparing test 2

Further, an 8T signal was repeatedly recorded (directly overwritten) ten times on the same track of each of the optical recording media fabricated in accordance with Working Examples 1 and 6 and Comparative Example 4.

The recording conditions were set the same as those of Characteristic Comparing test 1 except that an 8*T* signal was recorded.

After recording the 8*T* signal, the C/N ratio of the 8*T* signal recorded in each of the optical recording media of Working Examples 1 and 6 and Comparative Example 4 was measured.

The results of the measurement are shown in Table 2.

**Table 2**

| | Material of Transparent Heat Radiation Film | C/N (dB) | clock jitter (%) |
|---|---|---|---|
| Working Example 1 | AIN | 57.3 | 10.2 |
| Working Example 6 | Al₂O₃ | 56.0 | 12.1 |
| Comparative Example 4 | None | 53.7 | 16.5 |

As shown in Table 2, the highest C/N ratio was obtained in the case of the optical recording medium of Working Example 1 including the transparent heat radiation film formed of AlN, while in the case of the optical recording medium of Working Example 6 including the transparent heat radiation film formed of Al₂O₃ the C/N ratio was slightly lower than that of Working Example 1, and in the case of the optical recording medium of Comparative Example 4 including no transparent heat radiation film and the thick first dielectric film formed of ZnS• SiO₂ the C/N ratio was much lower. It is reasonable to assume that this is because the thermal conductivity of AlN is highest, that of Al₂O₃ is second highest and that of ZnS• SiO₂ is lowest so that the heat radiation characteristic of the L0 layer was highest in Working Example 1, was second highest in Working Example 6 and was lowest in Comparative Example 4, with the result that the value of the C/N ratio was highest in Working Example 1, was second highest in Working Example 6 and was lowest in Comparative Example 4.

Further, clock jitter of each of the optical recording media of Working Example 6 and Comparative Example 4 was measured in the manner of Characteristic comparing test 1.

The results of the measurement are shown in Table 2.

As shown in Table 2, the clock jitter values of the optical recording media of Working Example 6 and Comparative Example 4 were respectively 12.1 % and 16.5 %, i.e., the clock jitter was equal to or lower than 13 %, the upper limit of the practical level, in the optical recording medium of Working Example 6, while it exceeded 13 %, the upper limit of the practical level, in the optical recording medium of Comparative Example 4.

### Characteristic comparing test 3

A random signal was repeatedly recorded on the same track of the optical recording media fabricated in accordance with Working Example 1 and Comparative Example 5 in the manner of Characteristic comparing test 1 and clock litter of the random signal was measured every predetermined number of times the random signal was recorded.

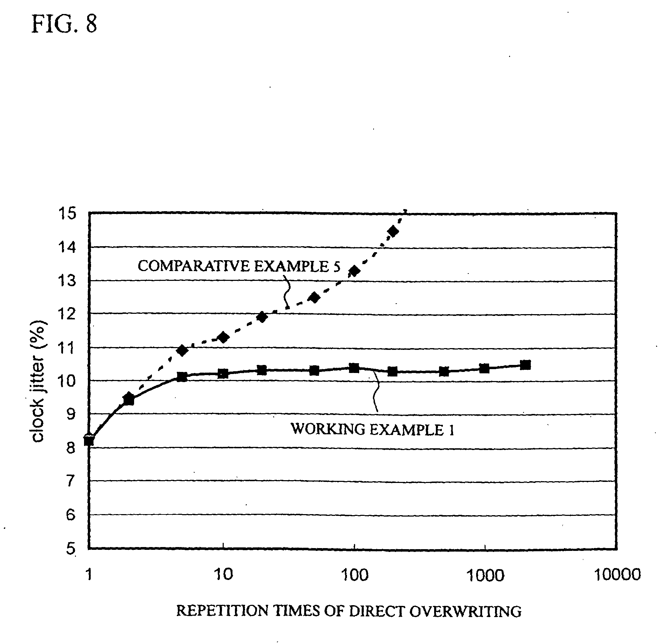

The results of the measurements are shown in Figure 8.

As shown in Figure 8, it was found that clock jitter did not exceed 11 % in the optical recording medium of Working Example 1 including the base protect film even when direct overwriting was repeated more than 1000 times but that clock jitter abruptly became worse in the optical recording medium of Comparative Example 5 provided with no base protect film as the number of direct overwritings increased and clock jitter exceeded 13 %, the upper limit of the practical level, when direct overwriting was performed about 100 times.

It is reasonable to assume that clock jitter abruptly became worse in the optical recording medium of Comparative Example 5 as the number of direct overwritings increased because the transparent intermediate layer was in contact with the translucent reflective film and the interface between the transparent intermediate layer and the translucent reflective film was locally heated by irradiation with the laser beam to be damaged and degraded.

Therefore, it was found that it was necessary to provide the base protect film between the transparent intermediate layer and the translucent reflective film, thereby physically separating the transparent intermediate layer and the translucent reflective film and preventing the transparent intermediate layer from being damaged by heat.

### Characteristic comparing test 4

A laser beam having a wavelength of 405 nm was projected using an objective lens having a numerical aperture NA of 0.85 onto each of the optical recording media fabricated in accordance with Working Example 1 and Comparative Example 6 and the amount of the laser beam reflected therefrom was measured and used to calculate the light transmittance of the L0 layer of each of the optical recording media.

As a result, it was found that the light transmittance of the L0 layer was 48 % and the reflectivity thereof was 7 % in the optical recording medium of Working Example 1 provided with the translucent reflective film having a thickness of 8 nm but that in the optical recording medium of Comparative Example 6 provided with the translucent reflective film having a thickness of 20 nm, the light transmittance of the L0 layer did not increase to or higher than 40 % and remained lower than 30 % in almost all cases, even when the thicknesses of transparent heat radiation film, the first dielectric film, the second dielectric film and the base protect film were varied.

Therefore, it was found that data could be recorded in the L1 layer and data could be reproduced from the L1 layer in the optical recording medium of Working Example 1, while it was difficult to record data in the L1 layer and reproduce data from the L1 layer in optical recording medium of Comparative Example 6.

Actually, in the case where a random signal was recorded in the L1 layer of the optical recording medium of Working Example 1 using the write strategy shown in Figure 6 where the recording power (Pw), the erasing power (Pe) and the bottom power (Pb) were set to 9.0 mW, 4.5 mW and 0.1 mW, respectively, even when direct overwriting was performed on the same track thereof 1000 times, clock jitter was 10.3 % and very good.

Therefore, it was found that it was necessary to form the translucent reflective film so as to have a thickness smaller than 20 nm.

The present invention has thus been shown and described with reference to a specific embodiment and working examples. However, it should be noted that the present invention is in no way limited to the details of the described arrangements but changes and modifications may be made without departing from the scope of the appended claims.

For example, although in the above described embodiment explanation was made as to the optical recording medium 10 including two recording layers in which data can be rewritten, the L0 layer 20 and the L1 layer 30, the optical recording medium of the present invention is not limited to an optical recording medium including two recording layer in which data can be rewritten and the optical recording medium may include three or more recording layers insofar as it includes two or more recording layers in which data can be rewritten.

Further, although in the above described embodiment each of the L0 layer 20 and the L1 layer 30 includes the recording film formed of a phase change material and is constituted so as to be able to rewrite data recorded therein, the configuration of the L1 layer 30 is not particularly limited and the L1 layer may be constituted as a recording layer provided with no recording film and adapted for only reading data, for example. In such a case, pre-pits are provided on the support substrate 11 and data are recorded in the pre-pits.

Furthermore, although in the above described embodiment the optical recording medium 10 is constituted so that the laser beam L is projected onto the L0 layer 20 or the L1 layer 30 via the light transmission layer 13, the optical recording medium may be constituted so that the laser beam is projected onto the L0 layer or the L1 layer via the support substrate 11. In the case where the optical recording medium is constituted so that the laser beam is projected onto the L0 layer or the L1 layer via the support substrate 11, the L0 layer 20 is disposed on the side of the support substrate 11 and the L1 layer 30 is disposed on the side of a light transmission layer 13 serving as a protecting layer.

According to the present invention, since the second dielectric film included in the data rewritable recording layer among recording layers other than the recording layer farthest from the light incidence plane has a thickness smaller than 15 nm, heat generated in the recording film by the laser beam projected thereonto when data are to be recorded can be quickly transmitted to the translucent reflective film having high heat radiation characteristics via the second dielectric film to be radiated thereby. Therefore, since the heat radiation characteristics of the recording layer can be improved, the heated recording layer can be quickly cooled, whereby the C/N ratio (carrier/noise ratio) of a signal can be improved and jitter thereof can be reduced.

Further, according to the present invention, since the translucent reflective film included in the data rewritable recording layer among recording layers other than the recording layer farthest from the light incidence plane has a thickness smaller than 20 nm, the light transmittance of the recording layer can be maintained high. Therefore, since it is possible to maintain the intensity of the laser beam reaching the recording layer farthest from the light incidence plane sufficiently high, it is possible to improve the data recording characteristics and reproducing characteristics of the recording layer farthest from the light incidence plane.

Furthermore, according to the present invention, since the base protect film is provided between the transparent intermediate layer and the translucent reflective film included in the recording layer other than the recording layer farthest from the light incidence plane, even in the case where the second dielectric film has a thickness smaller than 15 nm and the translucent reflective film has a thickness smaller than 20 nm, it is possible to prevent the transparent intermediate layer from being damaged by heat and it is therefore possible to improve the repeated data rewriting characteristics of the recording layer other than the recording layer farthest from the light incidence plane.

## Claims

1. An optical recording medium which comprises a support substrate, a plurality of recording layers formed on the support substrate and a transparent intermediate layer(s) formed between the plurality of recording layers and is constituted so that data can be recorded therein and/or reproduced therefrom by a laser beam projected through a light incidence plane, in which optical recording medium a recording layer other than a recording layer farthest from the light incidence plane among the plurality of recording layers is constituted so as to be able to rewrite data and comprises at least a recording film, a first dielectric film disposed in contact with the recording film on a side thereof on which the light incidence plane is present, a second dielectric film disposed in contact with the recording film on a side thereof opposite to the side on which the light incidence plane is present and having a thickness smaller than 15 nm, a transparent heat radiation film disposed in contact with the first dielectric film on a side thereof on which the light incidence plane is present, a translucent reflective film disposed in contact with the second dielectric film on a side thereof opposite to the side on which the light incidence plane is present and having a thickness smaller than 20 nm, and a base protect film disposed between the translucent reflective film and the transparent intermediate layer.

2. An optical recording medium in accordance with Claim 1, wherein the second dielectric film is formed so as to have a thickness of 1 nm to 10 nm.

3. An optical recording medium in accordance with Claim 1 or 2, wherein the translucent reflective film is formed so as to have a thickness equal to or larger than 4 nm.

4. An optical recording medium in accordance with any one of Claims 1 to 3, wherein the translucent reflective film is formed of metal.

5. An optical recording medium in accordance with Claim 4, wherein the translucent reflective film is formed of Ag.

6. An optical recording medium in accordance with any one of Claims 1 to 5, wherein the transparent heat radiation film is formed of a material having a higher thermal conductivity than that used for forming the first dielectric film.

7. An optical recording medium in accordance with Claim 6, wherein the transparent heat radiation film contains AIN or SiC as a primary component.
